# EUROPÄISCHE PATENTANMELDUNG

(11) **EP 4 606 203 A1**
(43) Veröffentlichungstag der Anmeldung: **27.08.2025**
(21) Anmeldenummer: 24217368.0
(22) Anmeldetag: 04.12.2024
(51) Int. Cl.: A01D 43/08, G06V 10/12, A01D 41/127, G01N 21/85

(54) **KAMERASYSTEM FÜR EINEN SELBSTFAHRENDEN FELDHÄCKSLER**

(30) Priorität: 30.01.2024 DE 102024102603
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Klein Helmkamp, Marwin, 49080 Osnabrück (DE); Jensen, Axel, 3200 Helsinge (DK); Larsen, Hans, 2970 Hørsholm (DK)
(74) Vertreter: CLAAS Gruppe

(57) **Zusammenfassung**

Die vorliegende Erfindung betrifft einen Feldhäcksler (1) mit einem Kamerasystem (16), welches dazu ausgeführt und eingerichtet ist, einen von Arbeitsaggregaten (20) des Feldhäckslers (1) bearbeiteten Erntegutstrom (21), der ganze Körner (23) und zerkleinerte Körner (24) als Kornbestandteile (25) sowie Nicht-Kornbestandteile (26) umfasst, zu erfassen und auszuwerten, umfassend einen Bildsensor (32) und ein dem Bildsensor (32) vorgeordnetes Objektiv (31), wobei der Bildsensor (32) in einem an einem Auswurfkrümmer (15) des Feldhäckslers (1) angeordneten Gehäuse (28) angeordnet ist, in welchem eine lichtdurchlässige Sichtscheibe (29) angeordnet ist, an welcher der Erntegutstrom (21) vorbeiströmt, sowie einer ersten Lichtquelle (33), deren Lichtstrahlen auf den Erntegutstrom (21) gerichtet sind, und eine Bildanalyseeinrichtung (27), an welche der Bildsensor (32) vom Erntegutstrom (21) aufgenommene Bilder zur Auswertung überträgt, wobei der Bildsensor (32) gegenüberliegend zu der Sichtscheibe (29) angeordnet ist.

## Beschreibung

Die vorliegende Erfindung betrifft ein Kamerasystem für einen selbstfahrenden Feldhäcksler gemäß dem Oberbegriff des Anspruches 1.

Aus der DE 10 2020 122 202 A1 ist ein Kamerasystem für einen Feldhäcksler gemäß dem Oberbegriff des Anspruches 1 bekannt. Das dort beschriebene Kamerasystem umfasst als Optionen für zumindest eine zum Einsatz kommende Kamera eine sichtbares Licht und infrarotes Licht aufnehmende Multispektralkamera oder eine Hyperspektralkamera oder eine RGB-Kamera in Kombination mit einer IR-Kamera, die jeweils Bilddaten zur Auswertung an eine Bildanalyseeinrichtung übertragen. Zur Bildaufnahme wird von einer Lichtquelle ein Erntegutstrom innerhalb eines Auswurfkrümmers beleuchtet. Die Erntegutbestandteile des Erntegutstroms reflektieren das Licht, welches anschließend über einen halbdurchlässigen Spiegel hin zu der Multispektralkamera gelangt. Mittels eines Bilderkennungsalgorithmus werden Kornbestandteile sowie Nicht-Kornbestandteile im Erntegutstrom detektiert. Die Verwendung eines Spiegels ist besonders anfällig für Montagefehler, da bereits kleinste Verunreinigungen des Spiegels oder geringe Abweichungen von der bestimmungsgemäßen Position zu fehlerhaften Aufnahmen des Kamerasystems führen.

Ausgehend vom vorstehend genannten Stand der Technik liegt der Erfindung die Aufgabe zugrunde, ein Kamerasystem der eingangs genannten Art weiterzubilden, welches sich durch einen kostengünstigeren und weniger komplexen Aufbau auszeichnet.

Diese Aufgabe wird erfindungsgemäß durch ein Kamerasystem mit den Merkmalen des Anspruches 1 gelöst. Vorteilhafte Weiterbildungen sind Gegenstand der hiervon abhängigen Ansprüche.

Gemäß Anspruch 1 wird ein Feldhäcksler mit einem Kamerasystem vorgeschlagen, welches dazu ausgeführt und eingerichtet ist, einen von Arbeitsaggregaten des Feldhäckslers bearbeiteten Erntegutstrom, der ganze Körner und zerkleinerte Körner als Kornbestandteile sowie Nicht-Kornbestandteile umfasst, zu erfassen und auszuwerten, umfassend einen Bildsensor und ein dem Bildsensor vorgeordnetes Objektiv, wobei der Bildsensor in einem an einem Auswurfkrümmer des Feldhäckslers angeordneten Gehäuse angeordnet ist, in welchem eine lichtdurchlässige Sichtscheibe angeordnet ist, an welcher der Erntegutstrom vorbeiströmt, sowie einer ersten Lichtquelle, deren Lichtstrahlen auf den Erntegutstrom gerichtet sind, und eine Bildanalyseeinrichtung, an welche der Bildsensor vom Erntegutstrom aufgenommene Bilder zur Auswertung überträgt, wobei der Bildsensor gegenüberliegend zu der Sichtscheibe angeordnet ist. Die Anordnung hat den besonderen Vorteil, dass das Kamerasystem spiegellos und somit weniger anfällig für Montagefehler ist und einen insgesamt kompakten Aufbau aufweist.

Gemäß einer vorteilhaften Ausgestaltung kann der Bildsensor als CMOS oder CCD Bildsensor ausgebildet sein, wobei der Bildsensor Bilder mit einer Bildrate im Bereich von 20 Bildern/Sekunde bis 40 Bildern/Sekunde aufnimmt, wobei die Belichtungszeit zwischen 2 Mikrosekunden und 20 Mikrosekunden liegt und das Objektiv eine Brennweite zwischen 2 mm und 12 mm, vorzugsweise zwischen 7mm und 10mmm, aufweist.

Bei dieser vorteilhaften Ausgestaltung ist die Überlegung wesentlich, die Ausführung des Bildsensors des Kamerasystems sowie die für das Aufnehmen von Bildern durch den Bildsensor wesentlichen Parameter an die im Auswurfkrümmer herrschenden Bedingungen, insbesondere die Strömungsgeschwindigkeit des Erntegutstroms nach dem Austritt aus einer Nachzerkleinerungsvorrichtung, welche im Bereich von 15 m/s bis 20 m/s liegt, optimal anzupassen. Mit der bevorzugten Parametrisierung des Bildsensors des Kamerasystems lässt sich ein Bildanalyseverfahren zur computerimplementierten Bestimmung des Kornaufschlussgrades von Körnern innerhalb des von Arbeitsaggregaten des Feldhäckslers bearbeiteten Erntegutstroms mittels der Bildanalyseeinrichtung des Kamerasystems durchführen, welches mit der hierfür erforderlichen Genauigkeit die Unterscheidung von Kornbestandteilen und Nichtkornbestandteilen und darauf basierend die Differenzierung zwischen ganzen Körnern und zerkleinerten Körnern durch optisches Sieben ermöglicht. Die erforderliche Genauigkeit der Unterscheidung von Kornbestandteilen und Nichtkornbestandteilen sowie die Differenzierung zwischen ganzen Körnern und zerkleinerten Körnern durch das Bildanalyseverfahren basiert auf einem vorgegebenen Bestimmtheitsmaß. Ferner ist die Verwendung eines CMOS Bildsensors aufgrund seiner schnellen Auslesbarkeit und flachbauenden Form besonders dazu geeignet in dem an dem Auswurfkrümmer angeordneten spiegellosen Kamerasystem eingesetzt zu werden. Insgesamt kann mit dem CMOS Bildsensor das Kamerasystem derart flachbauend ausgeführt werden, dass der Gesamtaufbau des Feldhäckslers die zulässige Gesamthöhe im eingefalteten Zustand des Auswurfkrümmers nicht überschreitet.

Eine weitere vorteilhafte Ausgestaltung sieht vor, dass das Kamerasystem eine zweite Lichtquelle umfasst, wobei die erste und zweite Lichtquelle einander gegenüberliegend seitlich neben der Sichtscheibe und dem Bildsensor innerhalb des Gehäuses angeordnet sind. Zwei Lichtquellen ermöglichen eine gleichmäßige Ausleuchtung des die Sichtscheibe passierenden Erntegutstroms.

Bevorzugt kann das Objektiv einen Bildwinkel im Bereich von 20° bis 40°, vorzugsweise im Bereich von 32° bis 37°, aufweisen.

Weiter bevorzugt kann die runde Sichtscheibe einen durch das Objektiv erfassbaren sichtbaren Durchmesser aufweisen, der größer als 7 cm und kleiner als 13 cm ist. In einer bevorzugten alternativen Ausgestaltung kann die Sichtscheibe rechteckig ausgebildet sein mit Seitenlängen zwischen 8 cm und 18 cm. Der vorschlagsgemäße Bereich für den Durchmesser bzw. die Seitenlängen der Sichtscheibe ist relevant hinsichtlich der Anforderung an die Bildrate, um die Genauigkeitsanforderung für die Auswertung durch die Bildanalyseeinrichtung zu gewährleisten. Mit zunehmendem Durchmesser ließe sich die Bildrate zwar reduzieren, dabei führt die Vergrößerung der Fläche der Sichtscheibe zu zunehmenden Anforderungen an die Belastbarkeit der Sichtscheibe. Aufgrund der Anordnung der Sichtscheibe im Auswurfkrümmer des Feldhäckslers ist diese dauerhaft dem Gutstrom ausgesetzt und erfährt Belastungen durch den vom Erntegutstrom ausgeübten Anpressdruck.

Gemäß einer bevorzugten Ausführung kann die Sichtscheibe aus Saphirglas oder einem Glas mit einer abnutzungsbeständigen Beschichtung, vorzugsweise einer Beschichtung aus CVD Diamant, bestehen. Saphirglas ist hinsichtlich seiner Festigkeit, Verschleißbeständigkeit und hohen Lichtdurchlässigkeit besonders für den Einsatz im Auswurfkrümmer geeignet.

Insbesondere kann das Gehäuse auf der Oberseite des Auswurfkrümmers angeordnet sein, wobei das Gehäuse bezogen auf die Längserstreckung des Auswurfkrümmers in dessen zweiten Hälfte angeordnet sein kann. Diese Position des Gehäuses stellt sicher, dass die Querverteilung des Häckselgutes die gesamte Breite des Auswurfkrümmers abdeckt. Als zweite Hälfte ist die dem Feldhäcksler abgewandte Hälfte des Auswurfkrümmers zu verstehen. Eine Position in der Nähe der Nachbearbeitungsvorrichtung würde zwar zu weniger strickten Rahmenbedingungen bezüglich der Bauhöhe des Gehäuses des Kamerasystems führen, da in angehobener Stellung im Erntebetrieb der untere Teil des Auswurfkrümmers jedoch etwa orthogonal zur Fahrtrichtung ist, wird die Innenseite des Auswurfkrümmers zunächst nur teilweise mit Häckselgut bedeckt. Eine Position im hinteren Segment des Auswurfkrümmers führt also zu einer maximalen Querverteilung und geringeren Gutgeschwindigkeiten des Häckselgutes.

Insbesondere kann das Kamerasystem eine Steuereinheit zur Ansteuerung der ersten Lichtquelle aufweisen. Besonders bevorzugt ist die Steuereinheit ebenfalls zur Ansteuerung der zweiten Lichtquelle vorgesehen und eingerichtet. Als Lichtquellen werden bevorzugt Matrix-LED-Scheinwerfer oder Laser Dioden verwendet.

Dabei kann die Steuereinheit zur Ansteuerung der Lichtquellen im Gehäuse angeordnet sein.

Es kann vorteilhaft sein, wenn die Lichtquellen im Gehäuse angeordnet sind. Eine gemeinsame Anordnung der Komponenten des Kamerasystems, des Bildsensors, des Objektivs sowie der Lichtquellen, in dem Gehäuse ermöglicht eine besonders kompakte Bauweise.

Insbesondere kann die in den Auswurfkrümmer hineinragende Sichtscheibe auf der Innenseite des Auswurfkrümmers mit dessen Oberfläche im Wesentlichen bündig abschließend angeordnet sein. So kann die Sichtscheibe in eine im Wesentlichen ringförmige Halterung eingeklebt sein, sodass sie bündig mit der innenseitigen Oberfläche des Auswurfkrümmers abschließt, wodurch Beeinflussungen des Gutstroms minimiert werden. Die ringförmige Halterung kann eine runde oder rechteckige Kontur aufweisen. Bei einer in eine ringförmige Halterung geklebten Anordnung der Sichtscheibe findet die dafür notwendige randseitige Auflagefläche beim durch das Objektiv erfassbaren sichtbaren Durchmesser der Sichtscheibe Berücksichtigung, welcher bei der Aufnahme des Erntegutstroms wirksam ist.

Bevorzugt kann die Stärke der Sichtscheibe im Bereich zwischen 2 mm und 4 mm liegen.

Gemäß einer Weiterbildung kann der Abstand der Lichtquelle zum Mittelpunkt der Sichtscheibe zwischen 50 mm und 120 mm, vorzugsweise zwischen 80mm und 100mm, betragen und die Lichtquelle kann unter einem Winkel zwischen 20° und 45°, vorzugsweise unter einem Winkel zwischen 35° und 40°, zur Oberfläche der Sichtscheibe geneigt angeordnet sein. Hierdurch kann eine indirekte Beleuchtung zur Unterbindung von Reflektionen entstehen.

Gemäß einer weiteren vorteilhaften Weiterbildung kann die Bildanalyseeinrichtung innerhalb des Gehäuses angeordnet sein, da diese zur Verarbeitung der Bilder eine besonders große Rechenleistung bedarf und die üblicherweise im Feldhäcksler vorhandenen Datenverarbeitungseinrichtungen diesem Bedarf nicht genügen.

Die vorliegende Erfindung wird nachstehend anhand eines in den Zeichnungen dargestellten Ausführungsbeispiels näher erläutert.

Es zeigen:
- Fig. 1: schematisch und exemplarisch einen Feldhäcksler;
- Fig. 2a: schematisch und exemplarisch eine perspektivische Ansicht eines Kamerasystems mit ausgeblendetem Gehäusedeckel;
- Fig. 2b: schematisch und exemplarisch eine perspektivische Ansicht des Kamerasystems gemäß Fig. 2a von der Unterseite;
- Fig. 3: schematisch und exemplarisch eine perspektivische Teilansicht eines Ausschnitts eines Auswurfkrümmers des Feldhäckslers mit darauf angeordnetem Kamerasystem.

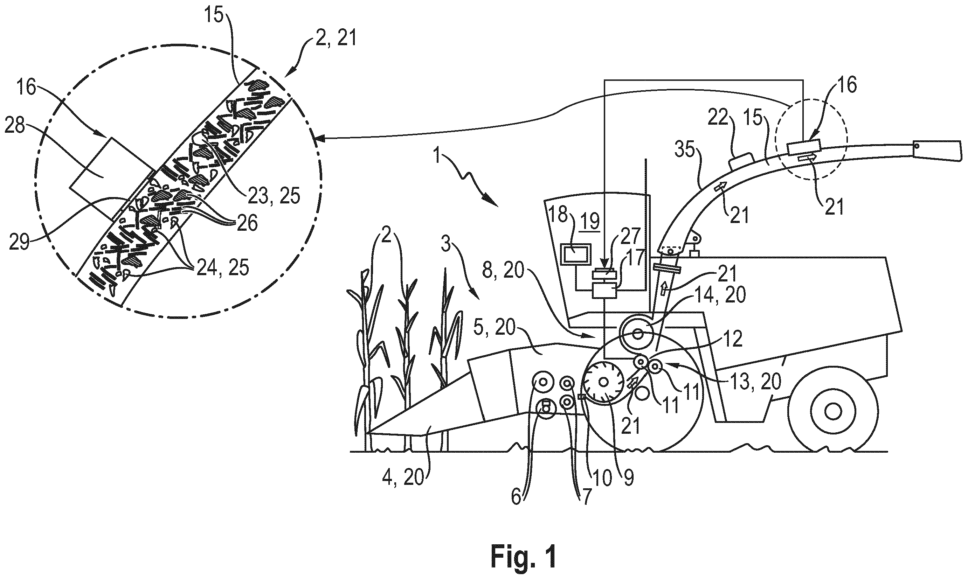

Fig. 1 zeigt schematisch und exemplarisch einen erfindungsgemäßen Feldhäcksler 1 beim Abernten eines Bestandes von Pflanzen, insbesondere Maispflanzen 2, auf einem Feld. Eine Aufnahmevorrichtung 3 des Feldhäckslers 1 umfasst in an sich bekannter Weise ein in Anpassung an das zu erntende Pflanzenmaterial austauschbares Vorsatzgerät 4 und eine Einzugseinrichtung 5 mit mehreren Walzenpaaren 6, 7, die das Erntegut von dem Vorsatzgerät 4 übernimmt, um es einer Häckselvorrichtung 8 zuzuführen. Die Häckselvorrichtung 8 umfasst eine drehangetriebene Häckseltrommel 9, eine Gegenschneide 10, über welche die Maispflanzen 2 von dem benachbarten Walzenpaar 7 der Einzugseinrichtung 5 hindurch geschoben werden, um durch Zusammenwirken der Gegenschneide 10 mit der Häckseltrommel 9 zerkleinert zu werden. Der Häckselvorrichtung 8 ist eine Nachzerkleinerungsvorrichtung 13, auch als Corn-Cracker bezeichnet, mit einem Paar von Konditionier- oder Crackerwalzen 11, die einen Spalt 12 von verstellbarer Breite, im Folgenden auch als Crackerspalt bezeichnet, begrenzen und mit unterschiedlichen Geschwindigkeiten rotieren, um in dem durch den Spalt 12 hindurchtretenden Materialstrom enthaltene Maiskörner zu zerkleinern, nachgeordnet. Ein Nachbeschleuniger 14 verleiht dem zerkleinerten und in der Nachzerkleinerungsvorrichtung 13 konditionierten Erntegut, hier den Maispflanzen 2, die notwendige Geschwindigkeit, um einen Auswurfkrümmer 15 zu durchlaufen und in ein (nicht dargestelltes) Begleitfahrzeug übergeladen zu werden. Der Auswurfkrümmer 15 weist über seine Längserstreckung einen im Wesentlichen rechteckförmigen Querschnitt auf. Der Auswurfkrümmer 15 weist eine durchgehende geschlossene Oberseite 35 und eine abschnittsweise offen ausgeführte Unterseite auf. Orthogonal zur Oberseite 35 des Auswurfkrümmers 15 sind Seitenwände angeordnet, welche einen durch den Auswurfkrümmer 15 hindurch geförderten Erntegutstrom 21 (durch Pfeile veranschaulicht) seitlich begrenzen und führen.

An dem Auswurfkrümmer 15 ist zumindest ein Kamerasystem 16 angeordnet, um Bilder des durch den Auswurfkrümmer 15 hindurch geförderten Erntegutstroms 21 zu erzeugen. Weiterhin kann auf dem Auswurfkrümmer 15 ein NIR-Sensor 22 angeordnet sein. Mittels des NIR-Sensors 22 lassen sich Ernteguteigenschaften bestimmen. Der NIR-Sensor 22 ist hier und bevorzugt dem Kamerasystem 16 vorgeordnet auf der Oberseite des Auswurfkrümmers 16 positioniert.

Das Vorsatzgerät 4, die Einzugsvorrichtung 5, die Häckselvorrichtung 8, die Nachzerkleinerungsvorrichtung 13 sowie der Nachbeschleuniger 14 und deren jeweilige Komponenten sind Arbeitsaggregate 20 des Feldhäckslers 1, die dem Abernten der Maispflanzen 2 eines Feldbestandes und/oder der Bearbeitung der Maispflanzen 2 des Feldbestandes im Rahmen des Ernteprozesses dienen.

Innerhalb des von den Arbeitsaggregaten 20 des Feldhäckslers 1 bearbeiteten Erntegutstroms 21 befinden sich ganze Körner 23 und zerkleinerte Körner 24 als Kornbestandteile 25 sowie Nicht-Kornbestandteile 26, wie Stängel, Blätter und dergleichen.

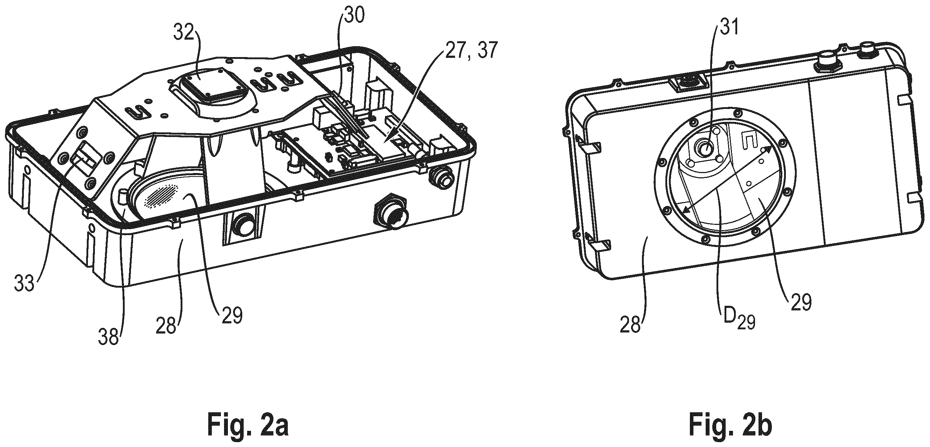

Das Kamerasystem 16 weist einen Bildsensor 32 (siehe Fig. 2a) zur Aufnahme von Bilddaten des im Erntegutstrom 21 enthaltenen Ernteguts auf. Der Bildsensor 32 nimmt ortsaufgelöst Bilddaten auf. Der Begriff "ortsaufgelöst" bedeutet hier, dass es in den Bilddaten möglich ist, Einzelheiten des Ernteguts zu unterscheiden. Der Bildsensor 32 weist also zumindest genügend Pixel auf, um die vorschlagsgemäße, noch zu erläuternde Bildanalyse zu ermöglichen. Das Kamerasystem 16 erfasst in einer Messroutine mittels des Bildsensors 32 Bilddaten des Ernteguts im Erntegutstrom 21, hier der zerkleinerten Maispflanzen 2. Diese Messroutine wird entsprechend während des Betriebs des Feldhäckslers 1 durchgeführt.

Die von dem Kamerasystem 16 generierten Bilder werden an eine Bildanalyseeinrichtung 27 übertragen und von dieser ausgewertet.

Die Bildanalyseeinrichtung 27 ist mit einem Fahrerassistenzsystems17 verbunden oder kann als Bestandteil des Fahrerassistenzsystems 17 ausgeführt sein. Besonders bevorzugt ist es jedoch, wenn die Bildanalyseeinrichtung 27 innerhalb des Gehäuses 28 des Kamerasystems 16 angeordnet ist, da dieses eine besonders große Rechenleistung zur Verarbeitung der Bilddaten des Bildsensors bedarf und die in dem Feldhäcksler 1 üblicherweise vorhanden Steuer- bzw. Datenverarbeitungseinheiten diesem Bedarf nicht genügen. Das Fahrerassistenzsystem 17 kann mit einer Eingabe-Ausgabe-Einheit 18 in einer Fahrerkabine 19 des Feldhäckslers 1 verbunden sein, um Auswertungsergebnisse darauf auszugeben. Das Fahrerassistenzsystem 17 steuert zumindest ein Stellglied zum Einstellen der Spaltweite des Crackerspalts 12 und/oder der Differenzdrehzahl und/oder der Drehzahlniveaus der Walzen 11 der Nachzerkleinerungsvorrichtung 13 an.

Die Walzen 11 der Nachzerkleinerungsvorrichtung 13 rotieren im Betrieb mit jeweils einer als Parameter einstellbaren Drehzahl, wobei zwischen den Walzen der Spalt 12 mit einer als Parameter einstellbaren Spaltbreite verbleibt. Des Weiteren weisen die Walzen 11 eine als Parameter einstellbare Drehzahldifferenz auf, um die sich die Drehzahlen der Walzen 11 unterscheiden. Zumindest einen der Parameter steuert das Fahrerassistenzsystem 17 in Abhängigkeit von einem zu bestimmenden Kornaufschlussgrad an.

Hintergrund der Ansteuerung der Nachzerkleinerungsvorrichtung 13 in Abhängigkeit vom Kornaufschlussgrad ist, dass es besonders bei der Verwendung des Ernteguts als Futtermittel für Tiere und bei der Verwendung in Biogasanlagen wichtig ist, dass die Kornbestandteile 25 des Ernteguts aufgeschlossen, also zerkleinert, werden. Wichtig ist das Aufschließen der Kornbestandteile 25, damit die darin enthaltene Stärke zugänglich wird und nicht durch die Hülle des Kornbestandteils 25 geschützt wird. Das Aufschließen der Kornbestandteile 25 geschieht einerseits durch das Häckseln des Ernteguts und andererseits wesentlich durch die Nachzerkleinerungsvorrichtung 13. Die Nachzerkleinerungsvorrichtung 13 kann zwar so eingestellt werden, dass mit Sicherheit alle im Erntegutstrom 21 enthaltenen Kornbestandteile 25 zerkleinert sind, was mit einem erhöhten Verbrauch an Energie bzw. Kraftstoff einhergeht. So könnte, um eine maximale Zerkleinerung und somit eine hohe Aufbereitungsqualität der Kornbestandteile 25 zu erreichen, die Spaltbreite minimal eingestellt werden. Diese unnötig hohe verbrauchte Energie kann damit nicht in eine Steigerung der Fahrgeschwindigkeit umgesetzt werden, so dass sich systemimmanent eine entsprechend geminderte Flächenleistung ergibt.

Nachstehend wird das Kamerasystem, welches in einem Verfahren zur computerimplementierten Bestimmung des Kornaufschlussgrades der Körner 23 verwendet wird, näher erläutert. Mittels des Kamerasystems 16 werden zyklisch aufgenommene Bilder des Erntegutstroms 21 an die Bildanalyseeinrichtung 27 zur Auswertung mittels eines Bildanalyseverfahrens übertragen. Das in den Fig. 2a und 2b näher dargestellte Kamerasystem 16 weist ein dem Bildsensor 32 vorgeordnetes Objektiv 31 und eine erste und zweite Lichtquelle 30, 33 auf. Der Bildsensor 32 weist ein Sichtfeld auf, in dem dieser vom Erntegutstrom 21 reflektiertes Licht detektieren kann. Der Bildsensor 32, das Objektiv 31 und die Lichtquellen 30, 33 sind in einem Gehäuse 28 des Kamerasystems 16 angeordnet, welches auf der Oberseite des Auswurfkrümmers 15 befestigt ist. Auf der dem Auswurfkrümmer 15 zugewandten Seite des Gehäuses 28 ist eine lichtdurchlässige Sichtscheibe 29 angeordnet. Die Sichtscheibe 29 besteht hier und vorzugsweise aus Saphirglas. In einer alternativen Ausgestaltung kann die Sichtscheibe 29 aber auch aus Glas mit einer abnutzungsbeständigen Beschichtung aus CVD Diamant bestehen.

Das auf der Oberseite des Auswurfkrümmers 15 angeordnete Gehäuse 28 des Kamerasystems 16 ist, bezogen auf die Längserstreckung des Auswurfkrümmers 15, in dessen zweiter Hälfte angeordnet.

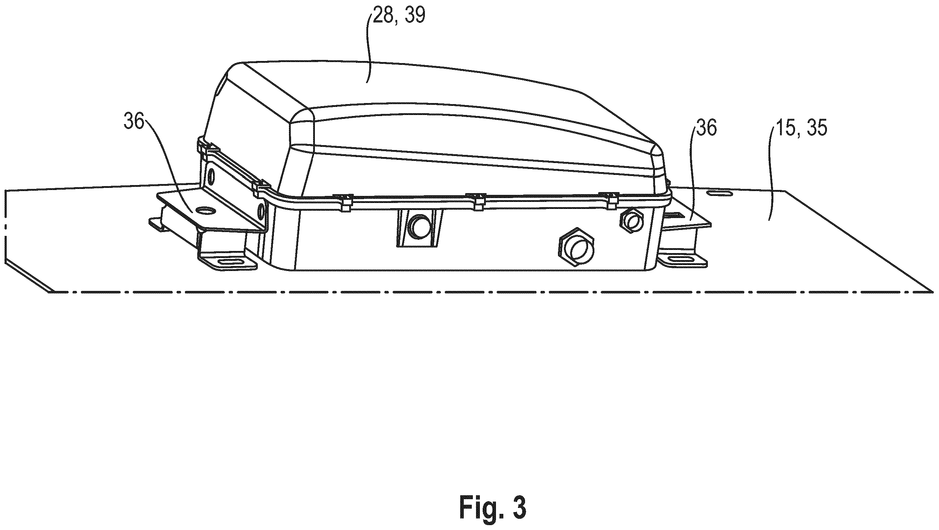

Fig. 3 zeigt schematisch und exemplarisch eine perspektivische Teilansicht eines Abschnitts der Oberseite 35 des Auswurfkrümmers 15 mit dem darauf angeordneten Kamerasystem 16. Das Gehäuse 28 ist mittels zweier Montagevorrichtungen 36 auf der Oberseite 35 des Auswurfkrümmers 15 lösbar befestigt. Gegenüber der Darstellung in Fig. 2a ist der Gehäusedeckel 39 hier abgebildet. In der Oberseite 35 des Auswurfkrümmers 15 ist eine hier nicht dargestellte Öffnung vorgesehen, in welche die Sichtscheibe 29 bündig mit der dem Erntegutstrom 21 zugewandten Oberfläche der Oberseite 35 abschließend eingelassen ist. Hier und vorzugsweise sind die Sichtscheibe 29 und die Öffnung im Wesentlichen kreisförmig ausgeführt. Alternativ können die Sichtscheibe 29 und die Öffnung rechteckig ausgeführt sein. Die Sichtscheibe 29 kann in eine im Wesentlichen ringförmige Halterung 38 (siehe Fig. 2a) eingeklebt oder eingeklemmt sein. Die Halterung 38 ist im Gehäuse 28 befestigt. Die Halterung 38 kann lösbar am Gehäuse 28 befestigt sein.

Die Sichtscheibe 29 weist einen durch das Objektiv 31 erfassbaren sichtbaren Durchmesser D₂₉ auf, der größer als 7 cm und kleiner als 13 cm ist. Besonders bevorzugt kann die Sichtscheibe 29 einen erfassbaren sichtbaren Durchmesser D₂₉ aufweisen, der größer oder gleich 9 cm und kleiner oder gleich 12 cm ist. In einer alternativen Ausgestaltung kann die Sichtscheibe 29 rechteckig ausgebildet sein, wobei die Seitenlängen der rechteckig ausgebildeten Sichtscheibe 29 größer oder gleich 8 cm und kleiner oder gleich 18 cm sind. Bei einer rechteckigen Ausführung der Sichtscheibe 29 wird der durch das Objektiv 31 erfassbare sichtbare Durchmesser D₂₉ durch die jeweilige Kantenlänge berücksichtigt.

Bei der Anordnung der Sichtscheibe in der Halterung 38 findet die dafür notwendige randseitige Auflagefläche beim durch das Objektiv 31 erfassbaren sichtbaren Durchmesser D₂₉ der Sichtscheibe 29 Berücksichtigung, welcher bei der Aufnahme des Erntegutstroms wirksam ist. Der durch das Objektiv 31 erfassbare sichtbare Durchmesser D₂₉ der Sichtscheibe 29 begrenzt das Sichtfeld.

Bevorzugt kann die Stärke der Sichtscheibe 29 im Bereich zwischen 2 mm und 4 mm liegen. Die Stärke der Sichtscheibe 29 hängt dabei im Wesentlichen vom Gesamtdurchmesser D respektive den Kantenlängen bei einer rechteckigen Ausführung der Sichtscheibe 29 ab.

Der Bildsensor 32 nimmt Bilder des Erntegutstroms 21 mit einer Bildrate im Bereich von 20 Bildern/Sekunde bis 40 Bildern/Sekunde auf. Besonders bevorzugt ist der Bildsensor als CMOS Bildsensor 32 ausgebildet, da ein solcher Sensor besonders geeignet zur Aufnahme und Verarbeitung einer derartigen Bildrate ist und einen flachen Aufbau aufweist. In einer alternativen Ausführung kann der Bildsensor 32 jedoch auch als CCD Sensor ausgeführt sein. Die Belichtungszeit liegt hier und vorzugsweise zwischen 2 Mikrosekunden und 20 Mikrosekunden. Das zur Aufnahme der Bilder verwendete Objektiv 31 weist eine Brennweite zwischen 2 mm und 12 mm auf. Hier und vorzugsweise beträgt die Brennweite 3 mm. Weiterhin weist das Objektiv 31 vorzugsweise einen Bildwinkel im Bereich von 20° bis 40° auf. In der hier gezeigten und bevorzugten Ausführungsform beträgt der Bildwinkel 30°.

Das Kamerasystem kann eine Steuereinheit 37 zur Ansteuerung der zumindest einen Lichtquelle 30, 33 aufweisen. Die Steuereinheit 37 zur Ansteuerung der zumindest einen Lichtquelle 30, 33 kann bevorzugt im Gehäuse 28 angeordnet sein. Besonders bevorzugt können die Steuereinheit 37 und die Bildanalyseeinrichtung 27 als ein gemeinsames Bauelement ausgebildet sein. Hier und vorzugsweise sind eine erste Lichtquelle 33 und eine zweite Lichtquelle 30 zur Beleuchtung des Erntegutstroms 21 innerhalb des Gehäuses 28 angeordnet. Die Lichtstrahlen der ersten und zweiten Lichtquelle 30, 33 sind demgemäß auf den Erntegutstrom 21 ausgerichtet. Die erste und zweite Lichtquelle 30, 33 sind seitlich neben der Sichtscheibe 29 und dem Bildsensor 32 einander gegenüberliegend positioniert. Die Verwendung von zwei Lichtquellen 30, 33 ist besonders vorteilhaft um eine gleichmäßige Ausleuchtung des die Sichtscheibe 29 passierenden Erntegutstroms 21 zu erreichen. Als Lichtquellen 30, 33 werden bevorzugt Matrix-LED-Scheinwerfer oder Laser Dioden verwendet.

Der Abstand der ersten und zweiten Lichtquelle 30, 33 zum Mittelpunkt der Sichtscheibe 29 beträgt vorzugsweise jeweils zwischen 50 mm und 120 mm. Die Lichtquellen 30, 33 sind jeweils hier und vorzugsweise unter einem Winkel zwischen 20° und 45° zur Oberfläche der Sichtscheibe 29 geneigt angeordnet. In der hier gezeigten und besonders bevorzugten Ausführungsform beträgt der Abstand der Lichtquellen 30, 33 zum Mittelpunkt der Sichtscheibe 29 jeweils 91,5 mm, wobei die Lichtquellen 30, 38 als LED Panels ausgebildet und jeweils unter einem Winkel von 38° zur Oberfläche der Sichtscheibe 29 geneigt angeordnet sind.

Die von dem Bildsensor 32 bereitgestellten Bilder werden an die Bildanalyseeinrichtung 27 zur Auswertung übertragen. Mittels der Bildanalyseeinrichtung 27 wird ein Bildanalyseverfahren zur computerimplementierten Bestimmung des Kornaufschlussgrades von Körnern innerhalb des von den Arbeitsaggregaten 20, insbesondere der Nachzerkleinerungsvorrichtung 13 des Feldhäckslers 1 bearbeiteten Erntegutstroms 21 durchgeführt. Dabei wird zumindest ein Arbeitsaggregat 20, hier und vorzugsweise die Nachzerkleinerungsvorrichtung 13, in Abhängigkeit vom Kornaufschlussgrad angesteuert. Das Bildanalyseverfahren ist dadurch gekennzeichnet, dass
- in einer ersten Stufe mittels digitaler Bildverarbeitung in den Bildern enthaltene Bildpixel in Kornbestandteile 25 und Nicht-Kornbestandteile 26 klassifiziert werden, und dass
- in einer zweiten Stufe des Bildanalyseverfahrens eine Längenbestimmen einer langen Hauptachse und einer kurzen Hauptachse jedes klassifizierten Kornbestandteils 25 mittels eines Längen-Breiten-Vergleichs durchgeführt wird,
wobei die Durchführung der ersten Stufe und der zweiten Stufe des Bildanalyseverfahrens durch zumindest ein neuronales Netzwerk durchgeführt wird.

Das zumindest eine neuronale Netzwerk kann Bestandteil der Bildanalyseeinrichtung 27 oder des Fahrerassistenzsystems 17 sein. Insbesondere kann das neuronale Netzwerk in Form einer U-Net Architektur eines gefalteten neuronalen Netzwerks (Convolutional Neural Network) oder als rückgekoppeltes neuronales Netzwerk (Recurrent Neural Network) ausgeführt ist, ausgebildet sein.

**Bezugszeichenliste**

| | | | |
|---|---|---|---|
| 1 | Feldhäcksler | 34 | Sichtfeld |
| 2 | Maispflanze | 35 | Oberseite von 15 |
| 3 | Aufnahmevorrichtung | 36 | Montagevorrichtung |
| 4 | Vorsatzgerät | 37 | Steuereinheit |
| 5 | Einzugseinrichtung | 38 | Halterung |
| 6 | Walzenpaar | 39 | Gehäusedeckel |
| 7 | Walzenpaar | D₂₉ | Durchmesser |
| 8 | Häckselvorrichtung | | |
| 9 | Häckseltrommel | | |
| 10 | Gegenschneide | | |
| 11 | Konditionier- oder Crackerwalze | | |
| 12 | Spalt | | |
| 13 | Nachzerkleinerungsvorrichtung | | |
| 14 | Nachbeschleuniger | | |
| 15 | Auswurfkrümmer | | |
| 16 | Kamerasystem | | |
| 17 | Fahrerassistenzsystem | | |
| 18 | Eingabe-Ausgabe-Einheit | | |
| 19 | Fahrerkabine | | |
| 20 | Arbeitsaggregat | | |
| 21 | Erntegutstrom | | |
| 22 | NIR-Sensor | | |
| 23 | Ganze Körner | | |
| 24 | Zerkleinerte Körner | | |
| 25 | Kornbestandteil | | |
| 26 | Nicht-Kornbestandteil | | |
| 27 | Bildanalyseeinrichtung | | |
| 28 | Gehäuse | | |
| 29 | Sichtscheibe | | |
| 30 | Zweite Lichtquelle | | |
| 31 | Objektiv | | |
| 32 | Bildsensor | | |
| 33 | Erste Lichtquelle | | |

## Patentansprüche

1. Feldhäcksler (1) mit einem Kamerasystem (16), welches dazu ausgeführt und eingerichtet ist, einen von Arbeitsaggregaten (20) des Feldhäckslers (1) bearbeiteten Erntegutstrom (21), der ganze Körner (23) und zerkleinerte Körner (24) als Kornbestandteile (25) sowie Nicht-Kornbestandteile (26) umfasst, zu erfassen und auszuwerten, umfassend einen Bildsensor (32) und ein dem Bildsensor (32) vorgeordnetes Objektiv (31), wobei der Bildsensor (32) in einem an einem Auswurfkrümmer (15) des Feldhäckslers (1) angeordneten Gehäuse (28) angeordnet ist, in welchem eine lichtdurchlässige Sichtscheibe (29) angeordnet ist, an welcher der Erntegutstrom (21) vorbeiströmt, sowie einer ersten Lichtquelle (33), deren Lichtstrahlen auf den Erntegutstrom (21) gerichtet sind, und eine Bildanalyseeinrichtung (27), an welche der Bildsensor (32) vom Erntegutstrom (21) aufgenommene Bilder zur Auswertung überträgt, **dadurch gekennzeichnet, dass** der Bildsensor (32) gegenüberliegend zu der Sichtscheibe (29) angeordnet ist.

2. Feldhäcksler (1) nach Anspruch 1, **dadurch gekennzeichnet, dass** der Bildsensor (32) als CMOS oder CCD Bildsensor (32) ausgebildet ist, wobei der Bildsensor (32) Bilder mit einer Bildrate im Bereich von 20 Bildern/Sekunde bis 40 Bildern/Sekunde aufnimmt, wobei die Belichtungszeit zwischen 2 Mikrosekunden und 20 Mikrosekunden liegt und das Objektiv (31) eine Brennweite zwischen 2 mm und 12 mm, vorzugsweise zwischen 7mm und 10mm, aufweist.

3. Feldhäcksler (1) nach einem der Ansprüche 1 oder 2, **dadurch gekennzeichnet, dass** das Kamerasystem (16) eine zweite Lichtquelle (30) umfasst, wobei die erste und zweite Lichtquelle (30, 33) einander gegenüberliegend seitlich neben der Sichtscheibe (29) und dem Bildsensor (32) innerhalb des Gehäuses (28) angeordnet sind.

4. Feldhäcksler (1) nach einem der Ansprüche 1 bis 3, **dadurch gekennzeichnet, dass** das Objektiv (31) einen Bildwinkel im Bereich von 20° bis 40°, vorzugsweise von 32° bis 37°, aufweist.

5. Feldhäcksler (1) nach einem der Ansprüche 1 bis 4, **dadurch gekennzeichnet, dass** die Sichtscheibe (29) rund mit einem Durchmesser (D₂₉) der größer als 7 cm und kleiner als 13 cm ausgebildet ist oder rechteckig mit Seitenlängen zwischen 8 cm und 18 cm ausgebildet ist.

6. Feldhäcksler (1) nach einem der Ansprüche 1 bis 5, **dadurch gekennzeichnet, dass** die Sichtscheibe (29) aus Saphirglas oder Glas mit einer abnutzungsbeständigen Beschichtung, vorzugsweise einer Beschichtung aus CVD Diamant, besteht.

7. Feldhäcksler (1) nach einem der Ansprüche 1 bis 6, **dadurch gekennzeichnet, dass** das Gehäuse (28) auf der Oberseite (35) des Auswurfkrümmers (15) angeordnet ist, wobei das Gehäuse (28) bezogen auf die Längserstreckung des Auswurfkrümmers (15) in dessen zweiten Hälfte angeordnet ist.

8. Feldhäcksler (1) nach einem der Ansprüche 1 bis 7, **dadurch gekennzeichnet, dass** das Kamerasystem (16) eine Steuereinheit (37) zur Ansteuerung zumindest der ersten Lichtquelle (33) aufweist.

9. Feldhäcksler (1) nach Anspruch 8, **dadurch gekennzeichnet, dass** die Steuereinheit (37) im Gehäuse (28) angeordnet ist.

10. Feldhäcksler (1) nach einem der Ansprüche 1 bis 9, **dadurch gekennzeichnet, dass** die in den Auswurfkrümmer (15) hineinragende Sichtscheibe (29) auf der Innenseite des Auswurfkrümmers (15) mit dessen Oberfläche im Wesentlichen bündig abschließend angeordnet ist.

11. Feldhäcksler (1) nach einem der Ansprüche 1 bis 10, **dadurch gekennzeichnet, dass** die Stärke der Sichtscheibe (29) im Bereich zwischen 2 mm und 4 mm liegt.

12. Feldhäcksler (1) nach einem der Ansprüche 3 bis 11, **dadurch gekennzeichnet, dass** der Abstand der ersten und zweiten Lichtquelle (30, 33) zum Mittelpunkt der Sichtscheibe (29) jeweils zwischen 50 mm und 120 mm, vorzugsweise zwischen 80 mm und 100 mm, beträgt und dass die erste und zweite Lichtquelle (33) jeweils unter einem Winkel zwischen 20° und 45°, vorzugsweise unter einem Winkel zwischen 35° und 40°, zur Oberfläche der Sichtscheibe (29) geneigt angeordnet ist.

13. Feldhäcksler (1) nach einem der Ansprüche 1 bis 12, **dadurch gekennzeichnet, dass** die Bildanalyseeinrichtung (27) innerhalb des Gehäuses (28) angeordnet ist.
